# FASCICULE DE BREVET EUROPEEN

(11) **EP 1 142 256 B1**
(45) Date de publication et mention de la délivrance du brevet: **26.09.2007**
(21) Numéro de dépôt: 00971509.5
(22) Date de dépôt: 26.10.2000
(51) Int. Cl.: H04L 29/06

(54) **TERMINAL SECURISE MUNI D'UN LECTEUR DE CARTE A PUCE DESTINE A COMMUNIQUER AVEC UN SERVEUR VIA UN RESEAU DE TYPE INTERNET**
GESICHERTES ENDGERÄT MIT CHIPKARTENLESER ZUR KOMMUNIKATION MIT EINEM SERVER ÜBER INTERNET
SAFE TERMINAL PROVIDED WITH A SMART CARD READER DESIGNED TO COMMUNICATE WITH A SERVER VIA AN INTERNET-TYPE NETWORK

(30) Priorité: 28.10.1999 FR 9913508
(43) Date de publication de la demande: 10.10.2001
(73) Titulaire: CP8 TECHNOLOGIES, 78431 Louveciennes (FR)
(72) Inventeur: MARIANA, Renaud, F-78150 Le Chesnay (FR)
(74) Mandataire: Cassagne, Philippe M.J.
(86) Numéro de dépôt international: PCT/FR2000/002979
(87) Numéro de publication internationale: WO 2001/031880

(56) Documents cités:
- WO-A-97/50207
- WO-A-98/57474

## Description

L'invention concerne une architecture de terminal, plus particulièrement un terminal du type mettant en oeuvre un clavier et un lecteur de carte à puce situés dans une enceinte sécurisée, et destiné à communiquer avec un serveur, via un réseau de type Internet.

Un tel dispositif est connu, par exemple, sous la dénomination commerciale "safepad".

Dans le cadre de l'invention, le terme "terminal" doit être compris dans un sens général. Le terminal précité peut être notamment constitué par un ordinateur personnel fonctionnant sous divers systèmes d'exploitation, tels WINDOWS ou UNIX (tous deux étant des marques déposées). Il peut être aussi constitué par une station de travail, un ordinateur portable ou un terminal de carte dit dédié.

De même, dans le cadre de l'invention, le terme "réseau Internet" englobe, outre le réseau Internet proprement dit, les réseaux privés d'entreprises ou similaires, dits "intranet", et les réseaux les prolongeant vers l'extérieur, dits "extranet".

II est connu par le document WO98/57474, un système d'accès et de communication par Internet qui utilise un téléphone sans fil permettant de stocker dans une carte à puce une adresse d'Internet provider, une adresse IP et d'autres données personnelles d'utilisateur. Une fois que la carte est insérée dans le lecteur relié au téléphone équipé de l'explorateur, il est permis d'activer cet explorateur pour utiliser les données Internet personnelles (le terminal étant connecté à Internet). Ce type de système permet de faire jouer à la carte à puce un rôle de fournisseur de paramètres/données de contrôle.

Les cartes à puce sont utilisées dans divers domaines applications bancaires, de santé, comme "porte-monnaie" dit électronique, etc. Sur une carte à puce peuvent en outre coexister plusieurs applications (carte à puce multi-application).

Pour ces types d'applications, les carte à puce peuvent se voir dévolues diverses fonctions. En particulier, elles peuvent être utilisées à des fins de sécurité. Le terme "sécurité" doit être compris dans un sens général : notamment confidentialité et/ou authentification de l'utilisateur de la station et/ou du propriétaire de la carte à puce elle-même.

Dans ce cadre plus particulier d'applications, le terminal peut être muni d'une enceinte sécurisée comprenant un lecteur de carte à puce, un clavier et éventuellement une ou plusieurs autres ressources informatiques.

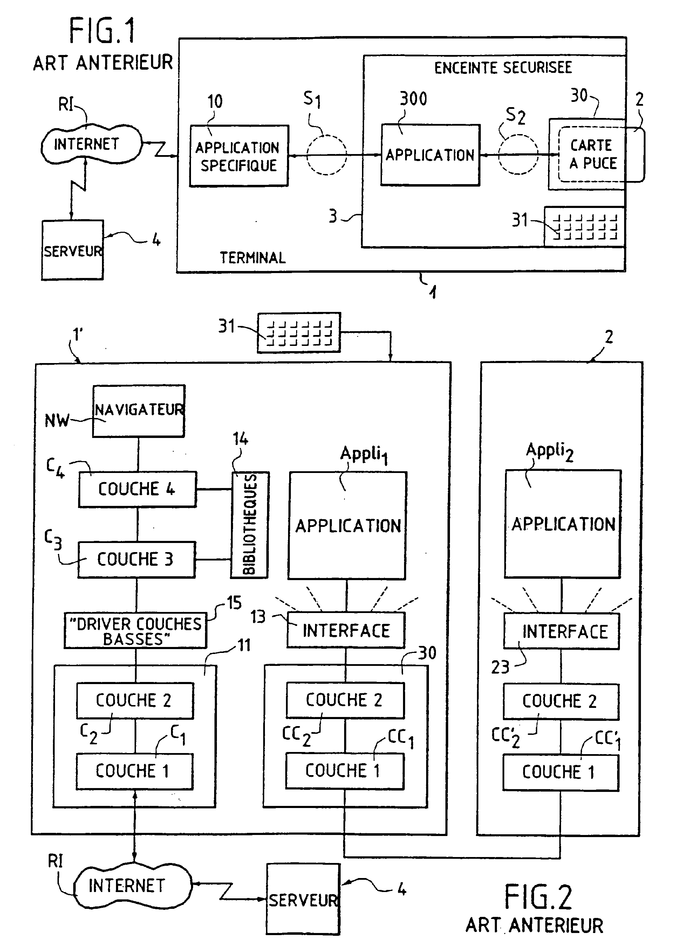

La figure 1 illustre très schématiquement l'architecture d'un terminal du type précité, selon l'art connu.

Pour fixer les idées, on va supposer que le terminal 1 est constitué à base d'un micro-ordinateur. Celui-ci est muni de tous les organes habituels constitutifs de tels appareils informatiques et nécessaires à leur bon fonctionnement (et qui n'ont pas été représentés) : unité centrale, mémoire vive, mémoire de masse (disque dur), lecteur(s) de support d'information (disquettes, etc.), etc. Dans le cas particulier illustré sur la figure 1, le terminal 1 est muni d'une enceinte sécurisée 3 comprenant un lecteur 30 de carte à puce 2 et un clavier 31. Le clavier 31 sert notamment à la saisie de données d'authentification du possesseur de la carte à puce 2 : par exemple un mot de passe associé à un identifiant de la carte à puce 2. Divers circuits électroniques permettent une communication entre les éléments sécurisés présents dans cette enceinte, notamment le clavier 31 et la carte à puce 2 (via le lecteur 30), d'une part, et ces éléments sécurisés et les éléments non sécurisés présents dans le terminal 1, d'autre part.

Habituellement, le terminal comprend, dans sa partie non sécurisée, une application spécifique 10, que l'on appellera ci-après "marchande", assurant la gestion et le contrôle de transactions particulières permises par le terminal 1 en question. Les communications entre cette application 10 et les éléments internes à l'enceinte sécurisée 3 s'effectuent habituellement selon un standard du type "RS232". Les communications entre les éléments internes à l'enceinte sécurisée 3, notamment une application résidente 300, et la carte à puce 2, via le lecteur 30, s'effectuent habituellement selon un protocole obéissant aux normes ISO 7816-1 à 7816-4.

Ce type d'architecture présente donc comme premiers inconvénients, notamment les suivants :
- l'application marchande implantée dans le terminal (partie non sécurisée) et celle résidente dans l'enceinte sécurisée sont spécifiques à ce terminal
- les programmes informatiques associés sont en général volumineux; et
- la souplesse et la fiabilité sont limitées, car une modification de ces programmes nécessite un rechargement de programmes dans le terminal (partie non sécurisée) et dans l'enceinte sécurisée, ainsi qu'éventuellement l'exécution de tests de bon fonctionnement, ce qui nécessite la présence de personnel spécialisé.

Généralement, cette dernière opération doit être répétée pour un grand nombre de terminaux.

Il doit en outre être conservé à l'esprit qu'il s'agit d'applications en tout ou partie sécurisées. On doit donc pouvoir garantir, pour la mise à jour de programmes, un niveau de sécurité déterminé, propre à l'application spécifique.

Le plus souvent, le terminal 1 n'est pas isolé, en ce sens qu'il est relié, via un réseau de transmission *RI*, à un ou plusieurs systèmes éloignés, dont un seul 4 a été illustré sur la figure 1. La nature du réseau *RI* peut être très diverse, selon les applications envisagées (application bancaire, de santé, etc.). Il peut s'agir notamment du réseau Internet ou d'un réseau de ce type (intranet ou extranet), compte tenu du développement rapide de ce dernier type de réseau et des applications qui y font appel. De façon habituelle, l'architecture globale est du type dit "client-serveur", le "serveur" étant généralement le système éloigné 4 et le "client" étant le terminal 1. Mais dans certaines circonstances, les rôles peuvent être inversés ou alternés pendant le temps d'une transaction.

Dans une telle architecture, les programmes associés à l'application spécifique 10 et à l'application 300, en présence d'une modification de leur version, pour quelle que raison que ce soit, peuvent alors être mis à jour de façon centralisée, à partir d'un des serveurs éloignés, par exemple le serveur 4. Il s'ensuit qu'un des inconvénients signalés peut être atténué, la mise à jour étant effectuée par télétraitement. Ces opérations nécessitent cependant la mise en oeuvre de procédures d'administration bien rodées. En outre, le téléchargement peut comprendre des données sensibles ou pour le moins ne doit pas autoriser l'implantation dans le terminal de programmes et/ou procédures non autorisés ou dangereux pour la sécurité ("cheval de Troie", "bombes logiques", virus, etc.).

En outre, avec la montée en puissance et l'universalité du réseau Internet, le besoin se fait sentir de "faire migrer" les applications spécifiques précitées, implantées localement dans les terminaux, vers les serveurs éloignés, que l'on appellera ci après "serveurs marchands", d'une part, et de dialoguer directement avec la carte à puce, à partir de ces serveurs marchands, d'autre part.

Ce second besoin, en particulier, ne peut être satisfait par les terminaux de l'art connu, pour des raisons qui vont être explicitées ci-après.

Mais tout d'abord, il paraît utile de décrire brièvement une architecture de système permettant la communication entre un terminal selon l'art connu et un serveur éloigné, via un réseau de type Internet *RI*. Une telle architecture est représentée schématiquement sur la figure 2, figure sur laquelle a été représentée plus particulièrement l'architecture logique du terminal, référencé 1'.

Le terminal 1' est ici un terminal d'un type général, sécurisé ou non, cette disposition n'étant pas importante pour expliciter les différents types de communications en cause.

Comme il a été indiqué précédemment, le terminal 1' comprend naturellement tous les circuits et organes nécessaires à son bon fonctionnement, et qui n'ont pas été représentés dans un but de simplification du dessin. Habituellement, le terminal 1' est aussi relié à des périphériques classiques, intégrés ou non, tels un écran de visualisation (non représenté) et un clavier 31, situé dans une enceinte sécurisée (figure 1 : 3) dans le cadre plus particulier de l'invention.

Habituellement, les communications sur les réseaux s'effectuent conformément à des protocoles répondant à des standards comprenant plusieurs couches logicielles superposées. Dans le cas d'un réseau *RI* de type Internet, les communications s'effectuent selon des protocoles spécifiques à ce type de communication, mais qui comprennent aussi plusieurs couches logicielles. Le protocole de communication est choisi en fonction de l'application plus particulièrement visée : interrogation de pages "WEB", transferts de fichiers, courrier électronique (e-mel, ou "e-mail" selon la terminologie anglo-saxonne), forums ou "news", etc.

L'architecture des réseaux de communication est décrite par diverses couches. A titre d'exemple, le standard "OSI" ("Open System Interconnection"), défini par I' "ISO", comporte sept couches qui vont des couches dites basses (par exemple la couche dite "physique" qui concerne le support de transmission physique) aux couches dites hautes (par exemple la couche dite "d'application"), en passant par des couches intermédiaires, notamment la couche dite de "transport". Une couche donnée offre ses services à la couche qui lui est immédiatement supérieure et requiert de la couche qui lui est immédiatement inférieure d'autres services, via des interfaces appropriées. Les couches communiquent à l'aide de primitives. Elles peuvent également communiquer avec des couches de même niveau. Dans certaines architectures, l'une ou l'autre de ces couches peut être inexistante.

Dans un environnement Internet, les couches sont au nombre de cinq, et de façon plus précise, en allant de la couche supérieure à la couche inférieure : la couche d'applications ("http", "ftp", "e-mail", etc.), la couche de transport ("TCP"), la couche d'adressage de réseau ("IP"), la couche de liens de données ("PPP", "Slip", etc.) et la couche physique.

Le terminal 1' comprend des circuits d'accès 11 au réseau Internet. Il peut s'agir d'un modem pour se connecter à une ligne téléphonique commutée ou à un réseau numérique à intégration de services ("RNIS"), via par exemple un prestataire de services Internet ("Internet Service Provider" ou "ISP", selon la terminologie anglo-saxonne). Les circuits 11 d'accès au réseau *RI* regroupent les couches logicielles inférieures C₁ et C₂, correspondant aux couches "physique" et de "lien de données" précitées.

On a également représenté les couches supérieures C₃ et C₄, correspondant aux couches "d'adressage de réseau" ("IP") et de "transport" (''TCP''). La couche supérieure d'application ("http", "ftp", "e-mail", etc.) est schématisée par un navigateur "WEB" NW de type quelconque, de préférence d'un type standard du commerce.

L'interface entre les couches inférieures, C₁ et C₂, et les couches supérieures, C₃ et C₄, est constituée par une couche logicielle 15 généralement appelée "driver couches basses". Les couches supérieures, C₃ et C₄, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet au navigateur NW de poser des requêtes vers un serveur éloigné 4, pour la consultation de pages ""WEB"" (protocole "HTTP"), pour le transfert de fichiers (protocole "FTP") ou l'envoi de courrier électronique (protocole "e-mail").

Le terminal 1' comprend également le lecteur de carte 30 situé dans une enceinte sécurisée (figure 1 : 3), dans le cadre plus particulier de l'invention. Pour communiquer avec la carte à puce 2, le lecteur de carte 30 englobe également deux couches basses, CC₁ (couche physique) et CC₂ (couche de lien de données), jouant un rôle similaire aux couches C₁ et C₂. Les interfaces logicielles avec les couches CC₁ et CC₂ sont décrites, par exemple, par la spécification "PC/SC" ("part 6, service provider"). Les couches elles-mêmes, CC₁ et CC₂, sont notamment décrites par les normes ISO 7816-1 à 7816-4.

Une couche logicielle supplémentaire 13 forme interface entre des couches applicatives, sous la référence unique *Appli*_{1*·*} et les couches inférieures, CC₁ et CC_{2·} La fonction principale dévolue à cette couche 13 est une fonction de multiplexage/démultiplexage.

Du côté de la carte à puce 2, on retrouve une organisation similaire, à savoir la présence de deux couches basses, référencées CC'₁ (couche physique) et CC'₂ (couche de lien de données), ainsi qu'une couche d'interface 23, tout à fait similaire à la couche 13. Cette couche 23 assure une interface entre les couches protocolaires CC'₁ et CC'₂ précitées et une ou plusieurs couches applicatives, représentées sous la forme d'un module unique référencée *Appli₂.*

Les communications entre le lecteur de carte à puce 30 et la carte à puce 2 s'effectuent à l'aide de commandes standardisées, connues sous l'abréviation anglo-saxonne de "APDU" (pour "Application Protocol Data Unit").

Différents protocoles sont utilisables, et à titre d'exemples non exhaustifs les suivants :
- la recommandation ETSI GSM 11.11 ;
- le protocole défini par la norme ISO 7816-3, en mode caractère T=0 ;
- le protocole défini par la norme ISO 7816-3, en mode bloc T=1 ;
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole, il est associé un certain nombre de primitives qui permettent les échanges de données entre couches de même niveau et d'une couche à l'autre.

Dans l'état actuel de la technique, il n'est pas possible de mettre en communication directe la carte à puce 2 avec un serveur éloigné 4, via le réseau Internet *RI,* car le protocole de communication entre une carte à puce 2 d'un type standard, qui vient d'être rappelé, est incompatible avec ceux utilisés sur le réseau Internet ou tout réseau de ce type. Il n'est pas non plus possible d'établir des communications directes entre le navigateur *NW* et la carte à puce 2, sauf à implanter dans le navigateur NW une pièce de logiciel, dit "plug-in", d'un type spécifique.

Si on se reporte de nouveau à la figure 1, en supposant que le terminal 1 est relié au réseau Internet, et en résumé de ce qui vient d'être rappelé, on constate que ce terminal 1, selon l'art connu, comprenant une enceinte sécurisée 3 munie d'un clavier 31 et d'un lecteur 30 de carte à puce 2, comporte deux interfaces principales de communication, *S*₁ et *S*₂, représentées en traits pointillés. Une première interface, *S*₁, relie l'enceinte 3 au terminal 1 proprement dit, où s'exécute l'application marchande 10, et une deuxième interface, *S*₂, est prévue pour les communications avec la carte à puce 2. En réalité, l'interface *S*₂ est répartie entre l'application 300 et la carte à puce 2. A ces deux interfaces s'ajoute en outre l'interface vers l'extérieur (figure 2 : circuits 11 notamment), qui permet au terminal 1 de communiquer avec le réseau Internet *RI.* L'interface *S*₁ accepte deux niveaux de dialogue : un premier dialogue transparent pour lequel un ordre émis par le terminal 1 s'exécute sans modification sémantique par l'interface *S*₂, et un second niveau de dialogue qui fait intervenir l'application 300.

Ainsi l'authentification par saisie de mot de passe sur le clavier 31 est un ordre soumis à l'interface *S*₁ qui est interprété par l'application 300 et transformé en une succession d'échanges sur l'interface *S*₂, entre l'application 300 et la carte à puce 2. Le résultat de ces échanges est transmis à l'interface *S*₁.

Outre le fait, qu'il est exclu, dans l'état actuel de la technique, qu'une carte à puce standard 2 accepte des échanges directs avec le réseau Internet *RI,* comme il vient d'être rappelé, l'inconvénient majeur des terminaux selon l'art connu est constitué par la présence de l'application résidente 300. Il s'agit le plus souvent d'une application dite "propriétaire", ce qui implique que l'application marchande 10 doit être écrite en fonction de la nature et du type de terminal utilisé. Elle est donc *a priori* différente d'un type de terminal à un autre, ce qui ne facilite pas les opérations de maintenance. En outre, elle n'est pas non plus adaptée à un environnement de type Internet.

Il a été proposé des standards pour des applications du type de celle de l'invention, comme le standard connu sous le sigle anglo-saxon "OCF" (pour "Open Card Framework") qui tend à la standardisation des échanges entre le terminal marchand 1 et le lecteur 30 de carte à puce 2, en respectant par exemple la norme "EMV" des terminaux. Cependant un tel standard n'est pas directement utilisable dans un contexte Internet.

Est également connu, dans le domaine des applications bancaires, le protocole dit "C-SET", protocole défini par le G.I.E. carte bancaire. Selon ce protocole, un utilisateur se connecte sur un site marchand disponible sur le "WEB" et procède à un achat. Ce dernier, lors de la transaction, sollicite des éléments de l'enceinte sécurisée pour authentifier le porteur de la carte bancaire effectuant l'achat. Cette authentification est effectuée par l'exécution d'un logiciel dans le terminal (partie non sécurisée) et l'enceinte.

Ce protocole n'est pas non plus exempt d'inconvénients :
- il rend nécessaire la présence d'un logiciel spécifique dans le terminal et dans l'enceinte ;
- il rend nécessaire la certification des logiciels imposés par *"*C-SET" *;*
- le protocole "C-SET" est uniquement orienté paiement : le logiciel dans le terminal qui traite les informations du serveur "WEB" et du paiement par la carte bancaire est un logiciel de paiement.

Par ces caractéristiques, il ne diffère guère des solutions de l'art connu précédemment évoquées. Il ne permet pas des communications de bout en bout, selon un protocole de type Internet, notamment un adressage direct de la carte à puce. De par sa spécificité, il n'offre aucune flexibilité et n'est pas adapté pour une utilisation dans d'autres domaines : santé, mise à jour de données stockées sur une carte à puce, crédit de points, etc.

Tout en palliant les inconvénients des procédés et architectures de l'art connu, et dont certains viennent d'être rappelés, l'invention se fixe pour but de remplir les besoins qui se font sentir.

Elle favorise l'utilisation sur le réseau Internet de terminaux comprenant une enceinte sécurisée munie d'au moins un lecteur de carte à puce et d'un clavier, en permettant la migration des applications des lecteurs de carte à puce et des terminaux vers un serveur éloigné de type "WEB", d'une part, et le dialogue direct avec la carte à puce, d'autre part.

Elle permet une mise à jour ou un ajout de logiciel interne à l'enceinte sécurisée, avec un maximum de sécurité.

Pour ce faire, selon un premier aspect de l'invention, la carte à puce n'est plus adressée de façon classique par des "APDU", conformément au protocole de communication ISO 7816 précité, mais par utilisation d'une adresse "URL" (pour "Universal Resource Location"). Comme il est connu, une adresse "URL" est constituée d'une adresse "IP" proprement dite et d'un numéro de port. De la même manière, l'enceinte sécurisée utilise cet adressage par "URL".

Selon un aspect de l'invention, la carte à puce se comporte donc aussi comme un serveur et/ou client "WEB".

L'enceinte sécurisée selon l'invention est "transparente" pour le réseau Internet, en ce sens que les "ordres carte" émanant du serveur marchand éloigné ne font pas intervenir d'éléments d'adressage du terminal. Il s'ensuit que les ressources associées à l'enceinte sécurisée ne sont pas accessibles du réseau Internet. Par contre, les applications contenues dans la carte à puce ont la possibilité d'adresser et d'activer toutes les ressources informatiques présentes dans l'enceinte sécurisée, notamment un clavier, par simple adressage "URL" comme il sera explicité ci-après.

Pour ce faire, le terminal comprend physiquement :
- une enceinte sécurisée d'un type modifié, comprenant au moins un lecteur de carte à puce et un clavier (et/ou une autre ressource informatique), tous deux rattachés à un serveur "HTTP" dit d'enceinte sécurisée, ainsi qu'une unité d'exécution qui gère l'ensemble des ressources présentes dans l'enceinte ; et
- outre des éléments classiques (mémoires, etc.) et un navigateur de type "WEB", un premier noeud de communication, dit de terminal, assurant des communications entre le réseau Internet, le navigateur de type "WEB" et/ou l'enceinte sécurisée.

Par ailleurs, l'enceinte sécurisée précitée comprend un deuxième noeud de communication, dit d'enceinte, assurant des communications entre le terminal proprement dit, via le premier noeud de communication, le serveur "HTTP" dit d'enceinte sécurisée, et/ou le lecteur de carte à puce.

La carte à puce est elle-même munie d'un troisième noeud de communication, dit de carte, et d'une adaptation logicielle se comportant comme un serveur "HTTP", formant interface entre au moins une application résidente dans la carte à puce et le deuxième noeud de communication.

Le premier noeud de communication aiguille les requêtes du réseau Internet ayant un numéro de port associé à l'enceinte sécurisée vers cette enceinte et effectue les adaptations de protocoles nécessaires pour mettre en communication directe le réseau Internet avec le deuxième noeud de communication, et assurer une propagation d'informations et/ou d'ordres vers la carte à puce.

Pour certaines applications, notamment des applications exigeant un haut niveau de sécurité, l'enceinte sécurisée peut comprendre avantageusement une ou plusieurs ressource(s) informatique(s) supplémentaire(s), tels par exemple des dispositifs d'authentification biométriques (reconnaissance oculaire, vocale et/ou de signature), un coprocesseur ou un interpréteur externe.

Dans une variante préférée du procédé selon l'invention, les programmes nécessaires au fonctionnement des éléments et ressources de l'enceinte sécurisée, ou leurs mises à jour, sont téléchargés, via le réseau Internet, depuis un serveur "WEB" distant relié à ce réseau. La mise à jour peut inclure l'effacement, au moins partiel de ces programmes.

On prévoit également, dans des variantes de réalisation supplémentaires, de télécharger, mettre à jour et/ou supprimer des applications ou parties d'applications enregistrées dans la carte à puce (fichiers, programmes, scripts, etc.), via le réseau Internet et les noeuds de communication.

Toutes ces opérations peuvent s'effectuer dans de très bonnes conditions de sécurité, du fait de la transparence précitée de l'enceinte sécurisée vis-à-vis du réseau Internet.

L'invention a donc pour objet principal un terminal muni d'une enceinte sécurisée destinée à communiquer avec au moins un serveur de type "WEB", via un réseau de type Internet, selon un premier protocole de communication de type Internet, ladite enceinte sécurisée comprenant au moins un lecteur de carte à puce, ladite carte à puce stockant au moins une application logicielle, caractérisé en ce que ledit terminal comprend une partie non sécurisée comprenant au moins un premier module dit premier noeud de communication, ladite enceinte sécurisée comprend au moins un deuxième module dit deuxième noeud de communication et ladite carte à puce comprend au moins un troisième module dit troisième noeud de communication; en ce que lesdits noeuds de communication comprennent des première, deuxième et troisième piles protocolaires, respectivement, comprenant chacune un nombre déterminé de couches logicielles de communication dites standards et des première, deuxième et troisième pièces de logiciel spécifique, respectivement, comprenant chacune au moins une première entité logicielle, lesdites premières entités logicielles étant appariées deux à deux, en ce que ledit premier noeud autorise au moins des communications entre ledit terminal et ledit serveur "WEB", selon ledit premier protocole de communication de type Internet, en ce que lesdites premières entités desdites première et deuxième pièces de logiciel spécifique autorisent l'établissement d'une session d'échanges de données bilatéraux entre ledit terminal et la dite enceinte sécurisée, selon un deuxième protocole de communication déterminé, en ce que lesdites premières entités desdites deuxième et troisième pièces de logiciel spécifique autorisent au moins l'établissement d'une session d'échanges de données bilatéraux entre la dite enceinte sécurisée et ladite carte à puce, via ledit lecteur de carte à puce, selon un troisième protocole de communication déterminé, de manière à pouvoir mettre en relation au moins une desdites applications logicielles de la carte à puce avec ledit serveur de type "WEB".

L'invention va maintenant être décrite de façon plus détaillée en se référant aux dessins annexés, parmi lesquels :
- la figure 1 illustre schématiquement un exemple de terminal selon l'art connu comprenant une enceinte sécurisée munie d'un lecteur de carte à puce et un clavier ;
- la figure 2 illustre de façon générale l'architecture logique d'un terminal selon l'art connu comprenant un lecteur de carte à puce et communiquant avec un serveur "WEB" via le réseau Internet ;
- la figure 3 illustre schématiquement un exemple d'architecture générale selon l'invention permettant des communications, via le réseau Internet, entre un serveur éloigné, dit marchand, et un terminal muni d'une enceinte sécurisée comprenant un lecteur de carte à puce, un clavier et d'autres ressources informatiques ;
- la figure 4 illustre l'architecture logique de modules permettant les communications entre l'enceinte sécurisée du terminal de la figure 3 et la carte à puce ; et
- la figure 5 illustre un mode de réalisation particulier de l'architecture logique de la carte à puce.

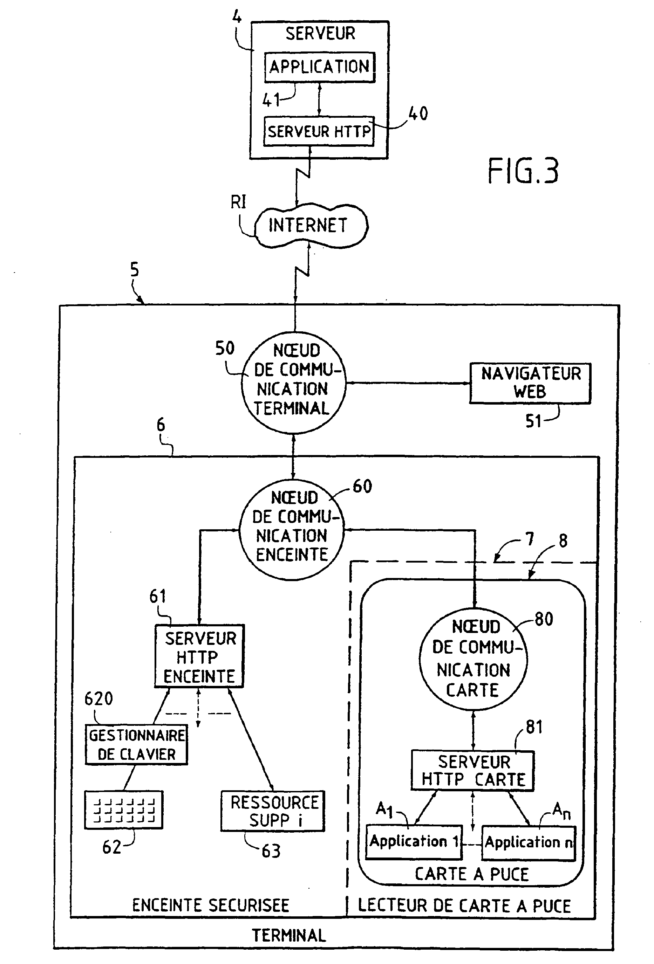

On va maintenant décrire un exemple de réalisation de terminal à enceinte sécurisée conforme à l'invention et l'architecture de système de communication entre ce terminal et un serveur dit "marchand", par référence à la figure 3.

Le terminal, désormais référencé 5, peut être réalisé, comme il a été indiqué, à base d'un micro-ordinateur ou d'un appareil similaire. Il comprend un certain nombre d'éléments classiques : microprocesseur, mémoires vive et morte, mémoire de masse (disque dur, etc.), etc. qui ne sont pas représentés et sont bien connus de l'Homme de Métier. Par contre, dans l'application propre à l'invention, le terminal 5 comprend une enceinte 6, sécurisée par des moyens physiques et logiques, connus en soi. Cette enceinte sécurisée 6 comprend des éléments communs à l'art connu, mais aussi des éléments spécifiques à l'invention et qui seront précisés ci-après. Elle comprend tout d'abord, comme dans l'art connu, un clavier 62, son gestionnaire 620, ou "handler" selon la terminologie anglo-saxonne, et un lecteur de carte à puce 7.

Le terminal 5 est connecté à un serveur éloigné 4 via le réseau Internet *RI* ou tout réseau de ce type (intranet, extranet). Comme dans le cas de la figure 2, il comprend donc tous les éléments logiques et matériels permettant de communiquer selon un des protocoles utilisés sur le réseau Internet, notamment le protocole "HTTP/TCP-IP". Il est donc inutile de re-décrire ces éléments, sauf à mentionner qu'il comprend un navigateur de type "WEB" référencé 51. Ce navigateur 51 permet notamment de poser des requêtes vers le serveur 4. II constitue une des applications présentes dans le terminal 5, celui-ci pouvant en effet en comporter une pluralité.

Selon une première caractéristique de l'invention, les applications spécifiques de l'application marchande ont migré vers le serveur 4. Ce dernier comprend donc notamment un serveur "HTTP" proprement dit 40 et les applications marchandes précitées, enregistrées dans des moyens de mémoires 41.

Selon une autre caractéristique de l'invention, le terminal comprend un premier module spécifique 50, que l'on appellera premier noeud de communication ou "noeud de communication terminal". Ce module 50 comprend des moyens classiques de communication, notamment les piles protocolaires décrites en relation avec la figure 2, mais aussi des éléments spécifiques qui seront décrits ultérieurement.

Selon une autre caractéristique encore, l'enceinte sécurisée 6 comprend aussi un module spécifique 60, que l'on appellera deuxième noeud de communication ou "noeud de communication enceinte".

Le premier noeud de communication, 50, permet de faire communiquer les serveurs du réseau *RI,* par exemple le serveur 4, ainsi que les applications présentes dans la partie non sécurisée du terminal 5 (par exemple le navigateur "WEB" 51) avec les éléments présents dans l'enceinte sécurisée 6, notamment le lecteur de carte à puce 7 et la carte à puce 8, via le deuxième noeud de communication 60.

L'enceinte sécurisée 6 comprend un serveur "HTTP" 61, que l'on appellera serveur "HTTP enceinte", disposé entre le deuxième noeud de communication 60 et le clavier 62. Ce dernier constitue l'une des ressources informatiques de l'enceinte sécurisée 6. Cette dernière, comme il a été indiqué dans le préambule de la présente description, peut comprendre des ressources supplémentaires 1 à *i*, représentées sous la référence unique 63. Il peut s'agir, par exemple, de dispositifs d'authentification biométriques, d'un coprocesseur ou d'un interpréteur externe. La ou les ressource(s) 63 est (sont) également connectée(s) au serveur "HTTP" 61, de manière similaire au clavier 62.

Le serveur "HTTP" 61 et également connecté au lecteur de carte à puce 7.

Le noeud de communication 60 permet d'aiguiller les requêtes du terminal 5 vers la carte à puce 8, via le lecteur de carte à puce 7, de diriger, en sens inverse, les requêtes de la carte à puce 8, soit vers le serveur "HTTP" 61, soit vers le terminal 5, via le noeud de communication 50.

Selon un aspect de l'invention, le serveur "HTTP" 61 permet à la carte à puce 8, et uniquement à celle-ci, d'utiliser les ressources, 62 à 63, de l'enceinte sécurisée 6.

L'impossibilité d'accéder aux informations du clavier 62 ou des autres ressources 63, autrement qu'en passant par la carte à puce 8, qui joue un rôle d'intermédiaire, est due à plusieurs facteurs :
a/ l'enceinte 6 est physiquement sécurisée (impossibilité physique "d'espionner" les éléments) ;
b/ la programmation du noeud 60 est telle que celui-ci empêche tout routage de données provenant de l'extérieur vers l'entité "HTTP enceinte" 61, le noeud 60 étant par ailleurs protégé, puisque situé à l'intérieur de l'enceinte sécurisée 6 ; et
c/ la programmation de l'entité "HTTP enceinte" 61 est telle que cette dernière n'accepte pas de requêtes autres que celles émanant de la carte à puce 8, ce serveur 61 étant aussi protégé, puisque également situé à l'intérieur de l'enceinte sécurisée 6.

Si le point a/ est, en soi, commun à l'art connu et à l'invention, les points b/ et c/ constituent des caractéristiques spécifiques et avantageuses de l'invention.

On va maintenant décrire de façon plus détaillée comment s'effectuent les communications entre le réseau Internet *RI* et les éléments de la partie non sécurisée du terminal 5, entre ces derniers et ceux de l'enceinte sécurisée 6, entre les éléments de l'enceinte sécurisée 6, et entre ces derniers et la carte à puce 8, via le lecteur de carte à puce 7.

Selon l'une des caractéristiques principales de l'invention, toutes ces communications s'effectuent selon un mode que l'on qualifiera "d'homogène", tout à la fois compatible avec les protocoles Internet, par utilisation d'adresse de type standard "URL", et conservant les protocoles normalisés de communication, notamment entre la carte à puce 8 et le lecteur de carte à puce 7 (c'est-à-dire conformes aux normes ISO 7816 précitées).

Les communications entre le navigateur "WEB" 51 et le serveur "marchand" 4 ne posent pas de problèmes particuliers et peuvent s'effectuer normalement selon le protocole "HTTP", par utilisation de couches protocolaires classiques (voir figure 2) et d'un adressage "URL". Par contre, comme il a été rappelé, dans l'art connu, il n'en est pas de même entre les éléments non sécurisés et sécurisés d'un terminal (figure 1 : 1) où les communications sont habituellement effectuées en mode RS232, ni entre les éléments de l'enceinte sécurisée 6 et la carte à puce 8, via le lecteur 7. Dans ce dernier cas, comme il a été explicité en regard de la figure 2, les communications s'effectuent, certes par mise en oeuvre de couches protocolaires, mais à l'aide d'un jeu d'ordres "APDU", conformément à la norme ISO 7816-3 précitée, donc aussi de façon incompatible avec un protocole de type Internet.

Aussi, l'invention propose des dispositions spécifiques permettant d'unifier les communications, tout en conservant la standardisation des éléments entrant en jeu dans les communications et en ne conduisant qu'à des modifications mineures.

On va tout d'abord détailler les modifications à apporter à l'enceinte sécurisée 6 et à la carte à puce 8, pour pouvoir assurer des communications entre ces deux entités, de façon conforme à l'invention.

Selon une caractéristique de l'invention, on munit la carte à puce 8 d'un module spécifique constituant un troisième noeud de communication 80 et un serveur "HTTP" 81, que l'on appellera ci-après respectivement "noeud de communication carte" et "serveur HTTP de carte". La ou les n application(s) présente(s) dans la carte à puce 8, *A*₁ à *A*ₙ, sont connectées par une première face du serveur "HTTP" 81. Par ces dispositions, la carte à puce 8 est transformée en serveur et/ou client "WEB" pour l'enceinte sécurisée 6 et peut être "adressée" par une adresse "URL".

Cette architecture est obtenue, selon l'invention, essentiellement en implantant une première couche de protocole de communication spécifique dans la carte à puce 8. De même, une deuxième couche de protocole de communication spécifique, formant le pendant de la première, est implantée dans l'enceinte sécurisée 6.

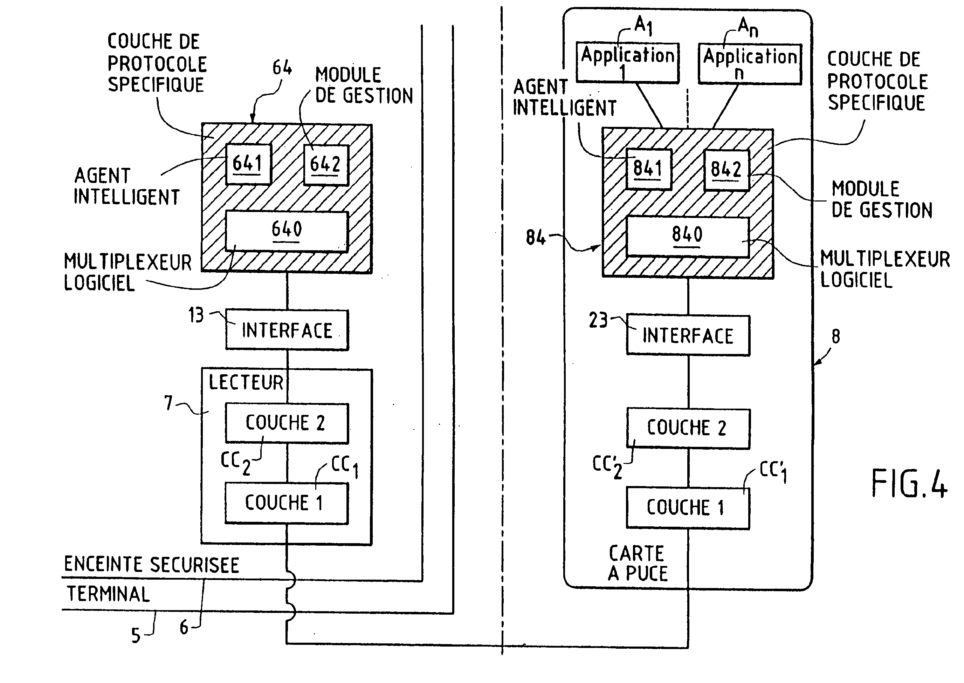

En ce qui concerne les échanges entre carte à puce 8 et enceinte sécurisée 6, le schéma fonctionnel de la figure 3 peut être représenté par l'architecture logique illustrée par la figure 4.

Dans cette architecture, on retrouve les couches protocolaires de l'art connu, comme illustré par la figure 2, qui jouent les mêmes rôles et portent les mêmes références. Il est donc inutile de les re-décrire.

Par contre, on prévoit, de part et d'autre, c'est-à-dire dans l'enceinte sécurisée 6 et dans la carte à puce 8, deux couches de protocoles spécifiques supplémentaires : 64 et 84, respectivement.

Dans l'enceinte sécurisée 6, la couche spécifique 64 s'interface aux couches protocolaires du lecteur de carte 3, c'est-à-dire les couches inférieures, CC₁ et CC₂, via la couche de multiplexage 13. La couche spécifique 64 permet le transfert de paquets de données de et vers la carte à puce 8. En outre, elle adapte les applications existantes pour des utilisations mettant en oeuvre la carte à puce 8, sans devoir les réécrire.

Du côté de la carte à puce 8, on retrouve une organisation tout à fait similaire constituée par une instance supplémentaire de la couche spécifique, référencée 84, pendant de la couche 64.

De façon plus précise, les couches spécifiques, 64 et 84, sont subdivisées en trois éléments logiciels principaux :
- un module, 640 ou 840, de transfert de blocs d'informations entre les couches 13 et 23, via les couches conventionnelles CC₁, CC₂, CC'₁ et CC'₂ ;
- une ou plusieurs pièces de logiciel, dites "agents intelligents", 641 ou 841, qui réalisent, par exemple, des fonctions de conversion de protocoles ;
- et un module de gestion de la configuration spécifique, 642 et 842, respectivement, module qui peut être assimilé à un agent intelligent particulier.

On retrouve donc, dans l'enceinte sécurisée 6 et la carte à puce 8, une pile protocolaire de communication entre les deux entités.

Les couches de niveau deux (couches de lien de données), CC₂ et CC'₂, assurent les échanges entre la carte à puce 8 et l'enceinte sécurisée 6. Ces couches sont responsables de la détection et l'éventuelle correction d'erreurs de transmission. Les différents protocoles rappelés sont utilisables à cette fin (recommandation ETSI GSM 11.11 ; le protocole défini par la norme ISO 7816-3, en mode caractère T=0 ou en mode bloc T=1 ; ou le protocole défini par la norme ISO 3309, en mode trame "HDLC"). Il a été indiqué que, dans le cadre de l'invention, on utilise de préférence le protocole ISO 7816-3, en mode bloc.

De façon connue en soi, à chaque couche de protocole il est associé un certain nombre de primitives qui permettent les échanges de données entre couches de même niveau et d'une couche à l'autre. A titre d'exemple, les primitives associées à la couche de niveau deux sont du type "demande de données" ("*Data.request*") et "envoi de données" par la carte ("*Data.response*")*,* ainsi que "confirmation de données" ("*Data.confirm*")*,* etc.

De façon plus particulière, les couches spécifiques 64 et 84 sont chargées du dialogue entre la carte à puce 8 et l'hôte, c'est-à-dire l'enceinte sécurisée 6. Elles permettent aussi la mise en place d'une configuration adaptée pour l'émission et/ou la réception de paquets de données.

Comme il a été indiqué ci-dessus, les couches comprennent trois entités distinctes.

La première entité, les modules 640 ou 840, est essentiellement constituée par un multiplexeur logiciel. Elle permet l'échange d'informations entre la carte à puce 8 et le terminal hôte 6, sous la forme d'unités de données de protocole. Elle joue un rôle similaire à celui d'un commutateur de paquets de données. Ces unités sont émises ou reçues via la couche de niveau 2 (couche de liens de données). Ce protocole particulier de communication permet de mettre en communication au moins une paire d' "agents intelligents". Le premier agent de chaque paire, 641, est situé dans la couche 64, côté enceinte sécurisée 6, le second, 841, est situé dans la couche 84, côté carte à puce 8. Une liaison entre deux "agents intelligents" est associée à une session. Une session est un échange de données bidirectionnel entre ces deux agents.

Un agent intelligent peut réaliser tout ou partie des fonctions des couches de niveau trois et quatre, en fonction de la configuration mise en oeuvre par l'enceinte sécurisée 6.

Un agent intelligent particulier est identifié avantageusement par un nombre entier, par exemple sur 16 bits (nombre compris entre 0 et 6535). Cet identificateur est utilisé, par exemple, dans une unité de donnée de protocole constituant une référence de destination et une référence de source.

Il existe deux grandes catégories d'agents intelligents : les agents de type "serveur", qui sont identifiés par une référence fixe, et les agents de type "client", qui sont identifiés par une référence variable, délivrée par le module de gestion de configuration, 642 ou 842.

Le processus d'ouverture d'une session est habituellement le suivant : un agent intelligent de type "client" ouvre la session vers un agent intelligent de type "serveur". Les modules 642 et 842 gèrent des tables (non représentées) qui contiennent la liste des agents intelligents présents, côté hôte 6 et carte à puce 8.

Les agents intelligents, 641 ou 841, sont associés à des propriétés ou attributs particuliers. Pour fixer les idées, et à titre d'exemple non limitatif, les quatre propriétés suivantes sont associées aux agents intelligents :
- "hôte" : agent localisé dans l'enceinte sécurisée ;
- "carte" : agent localisé dans la carte à puce ;
- "client" : agent qui initialise une session ;
- "serveur" : agent qui reçoit une demande de session.

Les agents intelligents permettent d'échanger des données.

Les modules de gestion de configuration, 642 et 842, respectivement, sont assimilables, comme il a été indiqué, à des agents intelligents particuliers. Par exemple, le module 642, côté hôte 6, gère notamment des informations relatives à la configuration de l'enceinte sécurisée 6 (modes de fonctionnement), liste des autres agents présents, etc. Le module 842, côté carte à puce 8, a des fonctions analogues. Ces deux agents peuvent être mis en communication l'un avec l'autre pour établir une session.

Selon une caractéristique de l'invention, la carte à puce 8 propose au système hôte, c'est-à-dire à l'enceinte 6, un modèle de terminal virtuel. Pour ce faire, la carte à puce 8 se comporte comme un serveur et/ou client "WEB".

De façon pratique, la carte à puce 8 est avantageusement "adressée" par utilisation d'une adresse "URL" définissant un rebouclage sur le terminal 5, et plus particulièrement sur l'enceinte sécurisée 6, et non un pointage sur un serveur externe, tel le serveur 4. A titre d'exemple, la structure de cet "URL" est habituellement la suivante :
http://127.0.0.1:8080 (1) ou
http://localhost:8080 (1bis)
dans laquelle 127.0.0.1 est l'adresse "IP" de rebouclage ("localhost" étant la traduction littérale de 127.0.0.1) et 8080 est le numéro de port. L'adresse "URL" des ressources 62 et/ou 63 pourrait être complétée par un suffixe du type "/xxx". Par exemple, le module de gestion 620 du clavier 62 pourrait avoir comme adresse "URL" la suivante :
http://localhost:8080/kb (2)

L'architecture logique permettant des communications entre le terminal 5 proprement dit (entre les noeuds 50 et 60), c'est-à-dire les éléments non sécurisés de celui-ci et l'enceinte sécurisée 6 est similaire à celle représentée sur la figure 4. En conséquence, des sessions vont pouvoir être établies entre les noeuds de communication 50 et 60 conformément au schéma général qui vient d'être décrit. L'enceinte sécurisée va notamment pouvoir être adressée par une adresse "URL", sous le même numéro de port que la carte à puce, soit 8080 dans l'exemple décrit.

Le noeud de communication 50 permet aussi au terminal 5 de communiquer avec le réseau Internet *RI*. Aussi, outre les propriétés associées aux agents intelligents qui ont été énumérées ci-dessus, il existe également les deux propriétés suivantes :
- "local" : agent ne communiquant pas avec le réseau ;
- "réseau" : agent communiquant avec le réseau ;

Le terminal 5, en sa globalité, est adressé par la même adresse "IP" que ci-dessus. Il héberge au moins une application dite de terminal, avantageusement le navigateur "WEB" 51. Celui-ci est associé à un port particulier.

A titre d'exemple, par une technique de page "WEB" et d'hyperliens, un utilisateur (non représenté) peut choisir un produit ou un service parmi ceux disponibles et transmettre la requête au serveur marchand 4.

Outre la fonction serveur-client "WEB" offerte par la carte à puce 8, selon un autre aspect de l'invention, il est inclus dans celle-ci un mécanisme similaire à la fonction dite "CGI" (pour "Common Gateway Interface") implantée dans les serveurs "WEB" classiques.

Avant de décrire un exemple d'une architecture conforme à l'invention, permettant de réaliser une fonction de ce type au sein même de la carte à puce 8, il est utile de rappeler les principales caractéristiques d'un mode de fonctionnement "CGI".

Le "CGI" est une spécification de mise en oeuvre, depuis un serveur "WEB", d'applications écrites pour les systèmes d'exploitation "UNIX" (marque déposée), "DOS", ou "WINDOWS" (marque déposée). A titre d'exemple, pour le système d'exploitation "UNIX", la spécification est "CGI 1.1" et pour le système d'exploitation "WINDOWS 95", la spécification est "CGI 1.3".

Toujours à titre d'exemple, une requête "HTTP" pour une adresse "URL", du type :
"http://www.host.com/cgi-bin/xxx" (3),
dans laquelle "host" se réfère à un système hôte (généralement éloigné), est interprétée par un serveur "WEB" comme l'exécution d'un script de commande, de type "CGI" nommé "xxx" et présent dans le répertoire "cgi-bin" de ce système hôte. Bien que le nom du répertoire puisse être *a priori* quelconque, par convention, c'est le nom donné au répertoire stockant les scripts de type "CGI". Un script est une suite d'instructions du système d'exploitation du système hôte dont le résultat final est transmis au navigateur "WEB" émetteur de la requête précitée ou à toute autre application sollicitant le service, comme un serveur marchand. Différents langages peuvent être utilisés pour écrire ce script, par exemple le langage "PERL" (marque déposée).

De façon pratique, la requête est habituellement affichée sur un écran informatique sous la forme d'un formulaire compris dans une page "HTML". Le langage "HTML" permet de poster un formulaire à une adresse "URL". Le formulaire comporte un ou plusieurs champs, obligatoires ou non, qui sont remplis par un utilisateur à l'aide des moyens de saisie habituels : clavier pour le texte, souris pour les cases à cocher ou les boutons dits "radio", etc. Le contenu du formulaire (ainsi qu'éventuellement des informations et instructions dites "cachées") est émis à destination du serveur "WEB". Le code "HTML" de la page décrit la structure matérielle du formulaire (cadre, graphisme, couleur, et tout autre attribut), ainsi que la structure des champs de données à saisir (nom, longueur, type de données, etc.).

La transmission peut s'effectuer selon deux types de formats "HTTP" principaux. Un premier format utilise la méthode dite "POST" et un second la méthode dite "GET". Une information de type de format est présente dans le code de la page formulaire.

Ce mécanisme n'est cependant pas directement transposable à une carte à puce, même si celle-ci offre la fonctionnalité serveur "WEB" conformément à l'une des caractéristiques de l'invention.

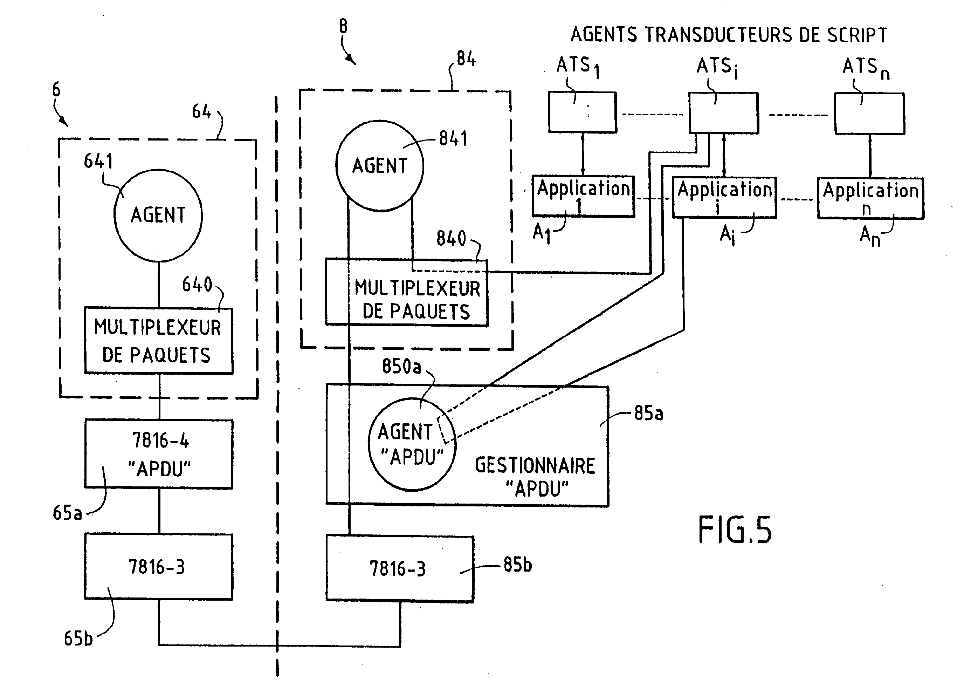

On va maintenant décrire un exemple d'architecture permettant d'activer une application quelconque, de type conventionnel, via un serveur "WEB" sur la carte à puce, par référence à la figure 5.

Le serveur marchand 4 active une requête "HTTP" de type "GET" à une adresse "URL" qui peut se présenter de la façon suivante :
"http://@carte:8080/xxx. 8080/cgi-bin/le_cgi ? param1+param2" (4),
dans laquelle "@carte" est l'adresse "IP" du terminal supportant la carte à puce (par exemple l'adresse de rebouclage "127.0.01" de la relation (1)), "le-cgi" est un script "CGI" particulier à exécuter sur la carte à puce 8 et "param1" et param2" des paramètres à passer au script précité. La requête est tout d'abord transmise à l'enceinte sécurisée 6, via les noeuds de communication 50 et 60 (figure 3).

Une session s'établit entre le terminal et le lecteur de carte à puce. Ensuite une autre session s'établit entre une paire d'agents intelligents, 641 et 841, localisés dans les couches spécifiques de l'enceinte sécurisée 6 et de la carte à puce 8, respectivement 64 et 84. Les données traversent alors le multiplexeur de paquets 640 de la couche protocolaire de communication spécifique 64. Elles traversent ensuite les couches protocolaires classiques (voir figure 2). Cependant, pour mieux mettre en évidence certains aspects spécifiques de l'invention, qui vont être explicités ci-après, ces couches sont divisées en deux parties sur la figure 5 : un gestionnaire d'ordres "APDU" 65a et des couches protocolaires basses 65b (normes ISO 7816-3).

De même, dans la carte à puce 8, elles traversent les couches protocolaires basses, référencées 85*b*, et le gestionnaire d'ordres "APDU" côté carte, référencé 85a, puis le multiplexeur de paquets 840, pour être reçues par l'agent intelligent 841, que l'on appellera "agent WEB".

Il convient de remarquer que les données adressées à l'agent "WEB" 841 sont transportées, de façon conventionnelle en soi, sous formes d'ordres "APDU" destinés à l'application particulière "Multiplexeur de paquets" 840. Le gestionnaire d'ordres "APDU" 85a sélectionne cette application de manière tout à fait similaire aux autres applications présentes dans la carte à puce 8, *A*₁ à *Aₙ.* En d'autres termes, le multiplexeur de paquets 840 est vu par le gestionnaire d'ordres "APDU" 85a comme une application carte ordinaire.

La requête "HTTP" est alors analysée par l'agent "WEB" 841 qui détecte une référence à un répertoire particulier, que l'on appellera ci-après par convention "cgi-smart", d'une part, et à une application particulière, par exemple *Aᵢ*. Le chemin complet est donc, en l'occurrence, "cgi-smart/*Aᵢ* ".

Selon une caractéristique du procédé de l'invention, l'entité ci-dessus désigne un script particulier associé à une application également particulière.

Selon un autre aspect de l'invention, on implante dans la carte à puce 8 des agents intelligents particuliers, que l'on appellera ci-après "Agents traducteurs de script" ou de façon abrégée "ATS". Le script est alors interprété par un des agents intelligents. Cette traduction peut être réalisée de différentes manières :
a/ par l'agent "WEB" 841 lui-même, qui est doté dans ce cas d'une double capacité ;
b/ par un agent script unique capable de traduire l'ensemble des scripts présents dans la carte à puce 8 ;
c/ par un agent de script dédié que l'on appellera "ATSD" ci-après (un par script) ; ou
d/ par un agent "APDU" 850a du gestionnaire d'ordres "APDU" 85a, qui est doté, dans ce cas, d'une double capacité.

L'agent "APDU" 850a est une composante de la couche gestionnaire d'ordres "APDU" 85a. Cette dernière est une couche capable de centraliser tous les ordres "APDU" émis et/ou reçus par le système, de sélectionner des applications, parmi *A*₁ à *A_{n'}* mais également d'offrir une interface de type agent intelligent. Elle est donc capable, selon l'une des caractéristiques ue l'invention de communiquer avec tous les agents intelligents (via des sessions), que ces agents soient localisés dans l'enceinte 6 ou la carte à puce 8.

Dans le cas c/ ci-dessus, une session est ouverte entre l'agent "WEB" 841 et l'un des agents "ATSD".

La figure 5 illustre un exemple d'architecture pour laquelle les agents traducteurs sont du type "ATSD". Ils sont référencés *ATS₁ à ATSₙ* et associés aux applications *A*₁ à *Aₙ.* L'application sélectionnée étant supposée être l'application *Aᵢ*, la session s'établit entre l'agent "WEB" 841 et l'agent *ATSᵢ*.

Un agent traducteur de script génère une suite d'ordres "APDU". Une session est ouverte entre l'agent traducteur, par exemple l'agent *ATSᵢ*, et l'agent "APDU" 850a. Les ordres sont alors émis vers l'agent "APDU" 850a. Le gestionnaire d'ordres "APDU" 85a sélectionne l'application "CGA" *Aᵢ* et lui transmet les ordres "APDU", ordres traduits et donc conventionnels, qu'elle est en mesure de comprendre. Cette application est donc correctement activée, sans avoir à la modifier ou à la réécrire.

Les réponses de l'application *Aᵢ* sont transmises au gestionnaire d'ordres "APDU" *85*a*,* à l'agent "APDU" 850a, puis de nouveau à l'agent *ATSᵢ* (et de façon plus générale à l'agent traducteur de script).

Les différents cheminements sont représentés symboliquement sur la figure 5 par des traits pleins reliant les blocs fonctionnels, ou en pointillés à l'intérieur de ces blocs.

Pour fixer les idées et sans que cela soit limitatif de la portée de la présente invention, la technique d'adressage étant désormais définie dans sa généralité, on va maintenant détailler ci-dessous divers routages possibles, que l'on appellera cas d'utilisation et que l'on référencera CU-*n* :
CU-1 : communication entre le serveur marchand 4 et la carte à puce 8.

Pour ce faire, une adresse "URL" conforme à (1) est utilisée. Dans ce cas, il n'est pas nécessaire d'utiliser le clavier 62. La requête, transmise via le réseau Internet *RI,* arrive sur le noeud de communication 50. Celui-ci identifie le port associé à la carte à puce, c'est-à-dire le port 8080, qui est le même que celui de l'enceinte sécurisée 6. Le noeud de communication 50 achemine la requête vers le noeud de communication 60. Dans tous les cas, quelle que soit l'adresse "URL", ce dernier achemine le paquet de données reçues vers la carte à puce 8, et plus précisément vers le serveur "HTTP" carte à puce 81, via le noeud de communication 80. En dernier lieu, celui-ci active l'une des applications de la carte à puce 8, par exemple l'application *A*₁.

CU-2 : communication entre deux applications de la carte à puce 8.

Par exemple, l'application *A*₁ veut communiquer avec l'application *Aₙ*. La requête émanant de l'application *A*₁ est acheminée par le serveur "HTTP" 81. De façon pratique, une session s'établit entre une paire d'agents intelligents locaux à la carte à puce 8, selon le schéma qui a été explicité en regard de la figure 4. Le noeud de communication 80 n'entre pas en jeu. Il n'y a pas d'adaptation de protocole de communication à prévoir.

CU-3 : communication entre une application carte et l'application marchande 41 dans le serveur 4.

Ce cas peut se produire, notamment, lorsque la carte à puce 8 a reçu une requête du serveur marchand 4 (cas CU-1). Une application locale à la carte à puce 8, par exemple l'application *A*₁, peut être activée. Une action déterminée, commandée par la requête reçue, est alors réalisée à l'intérieur de la carte à puce, par exemple une action de type "CGI", par exécution d'un script ou tout processus équivalent. Cette action est réalisée sous la commande d'agents intelligents traducteurs de script, comme il a été explicité en regard de la figure 5.

En résultat, l'application A₁ pose une requête destinée au serveur 4. Après examen de l'adresse "IP", le serveur "HTTP" 81 oriente la requête vers le noeud de communication 80. Il s'établit une session entre la carte à puce 8 et l'enceinte sécurisée 6, plus précisément entre les noeuds de communication 60 et 80, selon le schéma qui a été décrit en regard de la figure 4. De même, le noeud de communication 60, après examen de l'adresse "IP", transmet la requête au noeud de communication 50. Ce dernier, après examen de l'adresse "IP", transmet à son tour la requête, via le réseau Internet *RI,* vers sa destination finale, c'est-à-dire vers le serveur 4.

Le processus peut comporter plusieurs aller et retour entre la carte à puce 8 et le serveur 4, pendant le temps d'une transaction. Lorsque le processus est terminé (fin du "CGI" par exemple), la réponse de la carte à puce est transmise au serveur marchand 4, via notamment les noeuds successifs de communication 80, 60 et 50.

CU-4 : communication entre une "application carte" et une "application terminal".

A titre d'exemple, l'application *A*₁ veut par exemple communiquer avec un gestionnaire d'impression (non représenté) du terminal et pose une requête en ce sens. Après examen de l'adresse "IP" et du numéro de port, le serveur "HTTP" 81 oriente la requête vers le noeud de communication 80. La requête suit alors le même chemin que dans le cas CU-3, jusqu'à ce qu'elle atteigne le noeud de communication 50. Ce dernier, après examen de l'adresse "IP" et du numéro de port, oriente la requête vers l'application terminal adressée, par exemple le gestionnaire d'impression.

CU-5 : communication entre une "application carte" et une ressource de l'enceinte sécurisée.

On suppose tout d'abord, dans ce cas d'utilisation, que la carte à puce 8 est en mode "esclave" par rapport au serveur marchand 4 et que celui-ci a émis une requête à destination de la carte à puce 8. Cette requête est traitée de la façon explicitée par les cas CU-1 et CU-3. Il s'exécute par exemple un "CGI marchand" à l'intérieur de la carte à puce 8, de la manière qui a été décrite en regard de la figure 5. Ce script s'exécute en activant l'une des applications, par exemple *Aᵢ*, à l'aide d'un des agents traducteurs de script, par exemple *ATSᵢ.* On suppose que le CGI marchand a besoin d'informations en provenance du clavier 62 (mot de passe par exemple) ou d'autres informations d'authentification (en provenance d'un dispositif biométrique constituant l'une des ressources 63). Le CGI en question doit être exécuté avec un adressage "URL" particulier. L'application *Aᵢ* émet une requête dont l'adresse est par exemple celle donnée par (2) ci-dessus. La présence du suffixe "/kb" indique au noeud de communication 60 qu'il faut reboucler la requête vers le serveur "HTTP" 61 qui à son tour active le gestionnaire 620 de clavier 62, et récupère les informations attendues (saisie d'un mot de passe par exemple). La réponse de la requête est transmise, par le même chemin, mais en sens inverse vers la carte à puce 8.

La réponse de la requête du serveur marchand 4 est alors retransmise à celui-ci. Un dialogue à plusieurs temps peut s'instaurer de manière similaire au cas CU-3.

Plusieurs CGI peuvent être exécutés pendant le temps d'une transaction.

Pour fixer les idées, un premier "CGI marchand" peut avoir pour résultat l'affichage sur un écran compris dans l'enceinte sécurisée 6 (l'une des ressources représentées sous la référence unique 63) d'un message invitant un utilisateur à composer un code et affichant un montant. Un deuxième CGI lit par exemple des informations transmises par le clavier 62. Un troisième CGI peut avoir pour résultat sur ce même organe de visualisation d'un message du type "CODE CORRECT" ou tout message similaire.

CU-6 : communication entre le terminal et une des ressources de l'enceinte sécurisée.

A titre d'exemple, une application du terminal 5 (dans sa partie non sécurisée), par exemple le navigateur "WEB" 51, désire communiquer avec l'une des ressources sécurisées, par exemple avec le clavier 62, et émet une requête en ce sens. Le noeud de communication 50 examine l'adresse "URL", identifie le numéro de port de l'enceinte sécurisée 6 et transmet la requête à celle-ci. Le noeud de communication 60, du fait de sa programmation, oriente systématiquement les requêtes reçues, même si elles sont destinées à l'une des ressources internes à l'enceinte sécurisée 6, vers la carte à puce 8. A partir de ce stade, la requête suit un chemin similaire au cas CU-1. C'est la carte à puce 8 qui détermine s'il y lieu de retransmettre la requête vers la ressource sécurisée initialement adressée, éventuellement en la modifiant. La décision peut être le résultat d'une procédure d'identification mettant en jeu l'examen de données de sécurité enregistrées dans la carte à puce, notamment dans une mémoire de type à lecture seule, éventuellement sous forme chiffrée. Comme dans le cas CU-4, un élément externe à l'enceinte sécurisée 6 n'a donc jamais accès directement aux ressources sécurisées.

Cette dernière caractéristique permet des mises à jour de logiciels résidents dans l'enceinte sécurisée 6, des ajouts de logiciels ou des suppressions, au moins partielles, de ces logiciels, de façon plus fiable que dans l'art connu. En effet, il est d'usage d'authentifier des modifications de cette nature à partir d'une clé enfouie dans le logiciel de l'enceinte sécurisée 6.

Puisque seule la carte à puce 8 peut accéder de l'extérieur aux ressources protégées de l'enceinte sécurisée 6, le téléchargement de ressources logicielles peut donc s'effectuer à partir d'un serveur Internet, par l'intermédiaire de la carte à puce, tout en conservant un très grand degré de sécurité. Il suffit que les données téléchargées, si elles sont sensibles, soient convenablement chiffrées, en faisant usage d'un algorithme robuste et/ou d'une clé de chiffrage suffisamment longue. Du fait de la fonction d'intermédiaire jouée par la carte à puce 8, le mécanisme mis en oeuvre dans l'invention est *a priori* plus fort que celui d'un simple enfouissement de clé dans un organe de mémoire (non représenté) de l'enceinte sécurisée 6.

On peut également modifier le contenu des ressources logicielles de l'enceinte sécurisée 6 directement à partir d'une carte à puce 8, en téléchargeant des pièces de logiciel enregistrées dans celle-ci. Le volume de logiciel ainsi téléchargé est cependant limité par les ressources propres de la carte à puce (capacité de mémoire), ce qui n'est pas le cas a *priori* d'un téléchargement par réseau Internet à partir d'un serveur "WEB", le serveur pouvant être doté de ressources informatiques importantes. Le temps de téléchargement est naturellement dépendant de la quantité de logiciel à télécharger, mais l'utilisation de modems rapides et/ou de lignes de communication à haut débit est de nature à maintenir ce temps dans des limites tout à fait raisonnables pour les applications envisagées.

A la lecture de ce qui précède, on constate aisément que l'invention atteint bien les buts qu'elle s'est fixés.

Elle permet notamment, tout en conservant la possibilité d'utiliser des composants classiques et des modes de communication normalisés, notamment entre l'enceinte sécurisée et la carte à puce, via le lecteur, un adressage et des communications compatibles avec le protocole Internet "HTTP". Elle transforme la carte à puce en serveur-client "WEB", capable d'effectuer des opérations de type "CGI". Elle permet notamment un adressage direct et interactif de la carte à puce, à partir d'un serveur "WEB", via le réseau Internet, ou en sens contraire. Elle ne nécessite aucune application spécifique marchande sur le terminal lui-même et sur l'enceinte sécurisée. Elle offre une très grande souplesse et s'adapte aisément à de nombreux domaines d'application. Elle n'entraîne que des modifications mineures des composants utilisés, modifications qui se résument essentiellement à l'implantation de pièces de logiciel spécifiques, étant entendu que le mot "spécifique" n'indique pas une dépendance vis-à-vis des applications traitées. Notamment les applications résidentes dans la carte à puce restent des applications standards et ne nécessitent aucune réécriture. En outre, les applications spécifiques, d'un point de vue "application marchandes" sont entièrement localisées dans le serveur "WEB" éloigné. Ce dernier peut en contenir une pluralité. La mise à jour, la suppression de ces applications, ainsi que l'ajout de nouvelles applications, sont de ce fait aisés. Cette caractéristique offre une grande flexibilité. La version des programmes est identique pour tous les terminaux qui se connectent sur le serveur. Enfin, la sécurité assurée par l'invention est très grande. On peut faire appel à des algorithmes de chiffrage robustes et des clés de grande longueur pour les communications sur le réseau Internet. En outre, selon une caractéristique de l'invention, toutes les requêtes provenant de l'extérieur de l'enceinte sécurisée, que ce soit de la partie non sécurisée du terminal ou directement du réseau Internet, doivent obligatoirement passer par la carte à puce et restent sous son contrôle exclusif. Celle-ci décide seule, en fonction, par exemple, de données de sécurité résidentes, de l'usage qui doit être fait de ces requêtes. Or la carte à puce reste la propriété du porteur.

Il doit être clair cependant que l'invention n'est pas limitée aux seuls exemples de réalisations explicitement décrits, notamment en relation avec les figures 3 à 5.

Dans un mode de réalisation (non représenté) l'enceinte sécurisée pourrait ne contenir qu'un lecteur de carte à puce, la ou les application(s) enregistrée(s) dans la carte à puce étant autosuffisante(s) pour authentifier le porteur et/ou permettre une transaction entre le serveur "WEB" éloigné et la carte à puce. Le clavier peut être omis et remplacé par l'une des ressources sécurisées, tel qu'un dispositif biométrique. Enfin, on peut adjoindre au premier lecteur de carte à puce un deuxième lecteur de carte à puce, voire plusieurs.

## Revendications

1. Système comprenant une carte à puce (8) stockant au moins une application logicielle (A₁, Aₙ) et un terminal (5) destiné à communiquer avec au moins un serveur de type"WEB", via un réseau de type Internet (RI), le terminal (5) étant muni d'une première partie interface avec le réseau (RI) et d'une deuxième partie logée dans une enceinte sécurisée (6) par des moyens physiques et logiques, cette deuxième partie comprenant au moins un lecteur (7) de carte à puce pour recevoir la carte à puce (8), **caractérisé en ce que** :
- la première partie du terminal (5) comprend un premier module (50) qui permet au terminal (5) de communiquer avec le serveur (4) WEB, par établissement d'une communication entre le premier module (50) et le serveur (4) WEB suivant un protocole de communication de type Internet, ledit premier module (50) incluant des moyens de communication utilisant des couches d'interconnexion de systèmes ouverts spécifiques au protocole de communication de type Internet ;
- la deuxième partie du terminal (5) comprend un deuxième module (60) connecté au premier module (50) pour établir une communication entre la deuxième partie logée dans l'enceinte sécurisée (6) et la première partie suivant un protocole de communication de la deuxième partie, via des couches d'interconnexion de systèmes ouverts spécifiques à ce protocole de communication de la deuxième partie ;
- la carte à puce (8) comprend un troisième module (80) pour établir une communication entre la carte à puce (8) et ledit deuxième module (60) de la deuxième partie, suivant un protocole de communication de la carte à puce via des couches d'interconnexion de systèmes ouverts spécifiques à ce protocole de communication de la carte à puce, la carte à puce (8) comprenant en outre un serveur "HTTP" de carte (81) connecté via le troisième module de communication (80) au second module (60) ; et
- chacune des couches d'interconnexion de systèmes ouverts spécifiques au protocole de communication de la deuxième partie et chacune des couches d'interconnexion de systèmes ouverts spécifiques au protocole de communication de la carte à puce (8) est dotée d'une entité logicielle entité logicielle appelée agent intelligent (641,841) qui dispose de fonctions de conversion de protocole de façon qu'une communication de type Internet soit établie entre une application logicielle (A₁, Aₙ) résidant dans la carte à puce (8) et activée par ledit serveur de carte (81) et une application résidant dans le serveur (4) WEB, par l'intermédiaire des couches respectives d'interconnexion de systèmes ouverts associées avec les agents intelligent respectifs, un premier agent intelligent (641) étant prévu dans la deuxième partie et utilisant une interface (13) reliée au lecteur (7) de carte à puce pour communiquer avec un second agent intelligent (841) prévu dans la carte à puce (8), ces premier et second agents intelligents (641, 841) permettant une session d'échanges de données bilatéraux entre le second module (60) et le troisième module (80).

2. Système selon la revendication 1, **caractérisé en ce qu'**il comprend, dans ladite première partie, au moins une application constituée par un navigateur de type "WEB" (51), **en ce que** ledit premier protocole de type Internet pour communiquer entre la première partie et le serveur (4) WEB est le protocole "HTTP/TCP-IP" avec un adressage de type dit "URL", comprenant un élément d'adresse Internet dite "IP" et un numéro de port, pour la sélection dudit terminal (5) et d'un élément interne à ce terminal (5).

3. Système selon la revendication 1" **caractérisé en ce que** ladite deuxième partie logée dans l'enceinte sécurisée (6) comprend en outre au moins un clavier de saisie de données (62) et au moins un serveur"HTTP"dit d'enceinte (61) disposé entre ledit clavier (62) et le dit deuxième module(60). Système selon la revendication 1, **caractérisé en ce que** ladite deuxième partie logée dans l'enceinte sécurisée (6) comprend en outre au moins un clavier de saisie de données (62) et au moins un serveur "HTTP" dit d'enceinte (61) disposé entre ledit clavier (62) et le dit deuxième module (60).

4. Système selon la revendication 3, **caractérisé en ce que** ladite deuxième partie comprend au moins une ressource informatique supplémentaire (63) connectée audit serveur"HTTP" (61) logé dans l'enceinte sécurisée (6).

5. Système selon la revendication 4, **caractérisé en ce que** ladite ressource informatique supplémentaire (63) est un dispositif d'authentification biométrique.

6. Système selon la revendication 3, **caractérisé en ce que** ladite carte à puce (8) stocke plusieurs applications logicielles(A,-A,), **en ce qu'**elle comprend un serveur "HTTP" dit de carte (81) disposé entre lesdites applications logicielles (A₁-Aₙ) et ledit troisième module (80), et **en ce que** ledit serveur"HTTP"de carte (81) active sélectivement au moins l'une desdites applications logicielles (A₁-Aₙ) sur réception d'une requête en provenance dudit deuxième module (60) ou transmet les requêtes émises par lesdites applications (A₁-Aₙ) vers ledit troisième module (80).

7. Système selon la revendication 6, **caractérisé en ce que** ladite carte à puce (8) comprend en outre au moins une entité logicielle (ATS₁-ATSᵢ) supplémentaire apte à interpréter une suite d'instructions véhiculées par lesdites données reçues dudit troisième noeud de communication (80), et à la traduire en une suite d'ordres, ladite suite d'instructions traduite étant associée à une desdites applications logicielles à activer (A₁-Aₙ) de ladite carte à puce (8).

8. Système selon la revendication 7, **caractérisé en ce que** ladite suite d'instructions à interpréter étant constituée par un script, chacune desdites entités logicielles supplémentaires (ATS₁-ATSᵢ) est constituée par un module logiciel dit agent intelligent traducteur de script.

9. Système selon la revendication 1, **caractérisé en ce que** ledit serveur de type "WEB" (40) stocke une application logicielle dite marchande (41) destinée à être mise en communication interactive avec au moins l'une desdites applications logicielles (A₁-Aₙ) de ladite carte à puce (8) au travers desdits premier (50), deuxième (60) et troisième modules (80) de communication.

## Claims

1. System comprising a smart card (8) storing at least one software application (A₁, Aₙ) and a terminal (5) designed to communicate with at least one Web server via an Internet-type network (RI), the terminal (5) comprising a first part of network (RI) interface and a second part residing inside a logical and physical tamper-resistant enclosure (6), this second part comprising at least one smart card reader (7) for receiving the smart card (8), **characterized in that**:
- the first part of the terminal (5)comprises a first module (50) that enables the terminal to communicate with the Web server (4) by establishing of a communication between the first module (50) and the web server (4) in accordance with an internet-type communication protocol, said first module (50) comprising communication means using open-systems-interconnection layers specific to the internet-type communication protocol;
- the second part of the terminal (5) comprises a second module (60) connected to the first module (50) for establishing a communication between the second part located in the tamper resistant enclosure (6) and the first part in accordance with this communication protocol of the second part via open-systems-interconnection layers specific to this communication protocol of the second part;
- the smart card (8) comprises a third module (80) for establishing a communication between the smart card (18) and said second module (60) of the second part in accordance with a smart-card-communication protocol via open-systems-interconnection layers specific to the smart-card-communication protocol, the smart card (8) further comprising an "HTTP" card server (81) connected via the third communication module (80) to the second module (60); and
- each of said open-systems-interconnection layers specific to the communication protocol of the second part and each of said open-systems-interconnection layers specific to the smart-card-communication protocol is provided with a software entity called intelligent agent (641, 841) having protocol conversion functions so that an internet-type communication is established between a software application (A₁, Aₙ) residing on the smart card (8) and activated by the card server (81) and an application residing on the web server (4) through the respective open-systems-interconnection layers provided with the respective intelligent agents, a first intelligent agent (641) being provided in the second part and using an interface (13) linked to the smart card reader (7) for communicating with a second intelligent agent (841) provided in the smart card (8), these first and second intelligent agent (641, 841) allowing a bilateral data-exchange session between the second module (60) and the third module (80).

2. System of claim 1, **characterized in that** it comprises, in said first part, at least one application consisting of a web browser (51), and **in that** said internet communication protocol for communication between the first part and the web server (14) is the HTTP/TCP-IP protocol with URL addressing, comprising a so-called IP Internet address element and a port number for the selection of said terminal (5) and of an internal element of this terminal (5).

3. System of claim 1, **characterized in that** said second part located in the tamper resistant enclosure (6) further comprises at least one data entry keyboard (62) and at least one so-called enclosure HTTP server (61) disposed between said keyboard (62) and said second module (60).

4. System of claim 3, **characterized in that** said second part comprises at least one additional computing resource (63) connected to said HTTP server (61) of the peripheral part (6).

5. System of claim 4, **characterized in that** said additional computing resource (63) is a biometric authentication device.

6. System of claim 3, **characterized in that** said smart card (8) stores several software applications (A₁-Aₙ) **in that** it comprises a so-called card HTTP server (81) disposed between said software applications (A₁-Aₙ) and said third module (80), and **in that** said card HTTP server (81) selectively activates at least one of said software applications (A₁-Aₙ) upon reception of a request coming from said second module (60) or transmits the requests sent by said applications (A1-An) to said third module (80).

7. System of claim 6, **characterized in that** said smart card (8) further comprises at least one additional software entity (ATS₁-ATSᵢ) capable of interpreting an instruction set conveyed by said data received from said third communication module (80), and of translating it into a set of commands, said translated commands set being associated with one of said software applications to be activated (A₁-Aₙ) in said smart card (8).

8. System of claim 7, **characterized in that**, the instruction set to interpret being constituted by a script, each of said additional software entity (ATS₁-ATSᵢ) is constituted by a software module so-called script-translator intelligent agent.

9. System of claim 1, **characterized in that** said web server (4) stores a so-called merchant software application (41) designed to be placed in interactive communication with at least one of said software applications (A₁-Aₙ) of said smart card (8) via said first (50), second (60) and third communication modules (80).

## Patentansprüche

1. System mit einer Chipkarte (8), welche mindestens eine Softwareanwendung (A1, An) speichert, und einem Terminal (5), das zum Kommunizieren mit mindestens einem "WEB"-Server über ein Netzwerk des Typs Internet (RI) bestimmt ist, wobei das Terminal (5) einen ersten Schnittstellenteil mit dem Netzwerk (RI) besitzt und einen zweiten Teil, welcher in einem durch physikalische und logische Mittel gesicherten Gehäuse (6) untergebracht ist, wobei dieser zweite Teil mindestens einen Chipkartenleser (7) umfasst, um die Chipkarte (8) aufzunehmen, **dadurch gekennzeichnet, dass**:
- der erste Teil des Terminals (5) ein erstes Modul (50) umfasst, welches dem Terminal (5) gestattet, mit dem WEB-Server (4) zu kommunizieren durch Herstellen einer Kommunikation zwischen dem ersten Modul (50) und dem WEB-Server (4) gemäss einem Internet-Kommunikationsprotokoll, wobei das erste Modul (50) Kommunikationsmittel enthält, welche mit Kommunikationsschichten offener Systeme, die für das Internet-Kommunikationsprotokoll spezifisch sind, arbeiten;
- der zweite Teil des Terminals (5) ein zweites Modul (60) umfasst, welches mit dem ersten Modul (50) verbunden ist, um eine Kommunikation zwischen dem im gesicherten Gehäuse (6) untergebrachten zweiten Teil und dem ersten Teil gemäss einem Kommunikationsprotokoll des zweiten Teils herzustellen über Kommunikationsschichten offener Systeme, welche für dieses Kommunikationsprotokoll des zweiten Teils spezifisch sind;
- die Chipkarte (8) ein drittes Modul (80) umfasst zum Herstellen einer Kommunikation zwischen der Chipkarte (8) und dem zweiten Modul (60) des zweiten Teils gemäss einem Kommunikationsprotokoll der Chipkarte und über Kommunikationsschichten offener Systeme, welche für dieses Kommunikationsprotokoll der Chipkarte spezifisch sind, wobei die Chipkarte (8) außerdem einen "HTTP"-Kartenserver (81) umfasst, welcher über das dritte Kommunikationsmodul (80) mit dem zweiten Modul (60) verbunden ist; und
- jede der Kommunikationsschichten offener Systeme, welche für das Kommunikationsprotokoll des zweiten Teils spezifisch sind, und jede der Kommunikationsschichten offener Systeme, welche für das Kommunikationsprotokoll der Chipkarte (8) spezifisch sind, mit einer Softwareentität versehen ist, intelligenter Agent (641,841) genannt, welche Protokollkonvertierungsfunktionen umfasst, so dass eine Internet-Kommunikation hergestellt wird zwischen einer Softwareanwendung (A₁, Aₙ), welche in der Chipkarte (8) liegt und vom Kartenserver (81) aktiviert wird, und einer Anwendung im WEB-Server (4) und zwar über die jeweiligen Kommunikationsschichten offener Systeme, welche mit den jeweiligen intelligenten Agenten verknüpft sind, wobei ein erster intelligenter Agent (641) im zweiten Teil vorgesehen ist und mit einer mit dem Chipkartenleser (7) verbundenen Schnittestelle (13) arbeitet, um mit einem zweiten intelligenten Agenten (841) in der Chipkarte (8) zu kommunizieren, wobei dieser erste und dieser zweite intelligente Agent (641, 841) eine bilaterale Datenaustauschsession zwischen dem zweiten Modul (60) und dem dritten Modul (80) gestatten.

2. System nach Anspruch 1, **dadurch gekennzeichnet, dass** es im ersten Teil mindestens eine aus einem "WEB"-Browser (51) bestehende Anwendung umfasst, dass das erste Internet-Protokoll zur Kommunikation zwischen dem ersten Teil und dem WEB-Server (4) das Protokoll "HTTP/TCP-IP" mit einer sogenannten "URL"-Adresse ist, welche ein sogenanntes "IP"-Internet-Adresselement sowie eine Port-Nummer umfasst für die Auswahl des Terminals (5) und eines intern in diesem Terminal (5) befindlichen Elementes.

3. System nach Anspruch 1, **dadurch gekennzeichnet, dass** der im gesicherten Gehäuse (6) untergebrachte zweite Teil außerdem mindestens eine Dateneingabetastatur (62) umfasst und mindestens einen sogenannten "HTTP"-Gehäuseserver (61), welcher zwischen der Tastatur (62) und dem zweiten Modul (60) angeordnet ist.

4. System nach Anspruch 3, **dadurch gekennzeichnet, dass** der zweite Teil mindestens ein zusätzliches Datenverarbeitungsmittel (63) umfasst, welches mit dem im gesicherten Gehäuse (6) untergebrachten "HTTP"-Server (61) verbunden ist.

5. System nach Anspruch 4, **dadurch gekennzeichnet, dass** das zusätzliche Datenverarbeitungsmittel (63) eine Vorrichtung zur biometrischen Authentifizierung ist.

6. System nach Anspruch 3, **dadurch gekennzeichnet, dass** die Chipkarte (8) mehrere Softwareanwendungen (A,-A,) speichert, dass sie einen sogenannten "HTTP"-Kartenserver (81) umfasst, welcher zwischen den Softwareanwendungen (A₁-Aₙ) und dem dritten Modul (80) angeordnet ist, und dass der besagte "HTTP"-Kartenserver (81) nach Empfang einer Anfrage aus dem zweiten Modul (60) mindestens eine der Softwareanwendungen (A₁-Aₙ) selektiv aktiviert oder die von den Anwendungen (A₁-Aₙ) gesendeten Anfragen zum dritten Modul (80) übermittelt.

7. System nach Anspruch 6, **dadurch gekennzeichnet, dass** die Chipkarte (8) außerdem mindestens eine zusätzliche Softwareentität (ATS₁-ATSᵢ) umfasst, die in der Lage ist, eine Anweisungsfolge, welche in den aus dem dritten Kommunikationsknoten (80) empfangenen Daten enthalten ist, zu interpretieren und sie in eine Befehlsfolge zu übersetzen, wobei die übersetzte Anweisungsfolge mit einer der zu aktivierenden Softwareanwendungen (A₁-Aₙ) der Chipkarte (8) verknüpft ist.

8. System nach Anspruch 7, **dadurch gekennzeichnet, dass** die zu interpretierende Anweisungsfolge aus einem Script besteht, wobei jede der zusätzlichen Softwareentitäten (ATS₁-ATSᵢ) aus einem Softwaremodul, sogenannten intelligenten Agenten, der Script-Übersetzt ist, besteht.

9. System nach Anspruch 1, **dadurch gekennzeichnet, dass** der "WEB"-Server (40) eine sogenannte Handels-Softwareanwendung (41) speichert, die dafür bestimmt ist, mit mindestens einer der Softwareanwendungen (A₁-Aₙ) der Chipkarte (8) über das besagte erste (50), zweite (60) und dritte Kommunikationsmodul (80) interaktiv in Verbindung gesetzt zu werden.
